# EUROPEAN PATENT SPECIFICATION

(11) **EP 2 592 167 B1**
(45) Date of publication and mention of the grant of the patent: **16.08.2017**
(21) Application number: 12192000.3
(22) Date of filing: 09.11.2012
(51) Int. Cl.: C22C 38/00, C22C 38/44, C22C 38/58, B23K 35/30

(54) **Welding material for cryogenic steels**
Schweißmaterial für kryogene Stähle
Matériau de soudage pour des aciers cryogéniques

(30) Priority: 10.11.2011 JP 2011246785
(43) Date of publication of application: 15.05.2013
(73) Proprietor: Kabushiki Kaisha Kobe Seiko Sho (Kobe Steel, Ltd.), Kobe-shi, Hyogo 651-8585 (JP)
(72) Inventor: SHIMAMOTO, Masaki, Hyogo, 651-2271 (JP); WATANABE, Hirohisa, Kanagawa, 251-0014 (JP); SAWADA, Yushi, Kanagawa, 251-0014 (JP); MUKAI, Naoki, Kanagawa, 251-0014 (JP); NAMBA, Shigenobu, Hyogo, 651-2271 (JP); ISHIDA, Hitoshi, Hyogo, 651-2271 (JP); NATSUME, Yukinobu, Hyogo, 651-2271 (JP)
(74) Representative: Busher, Samantha Jane

(56) References cited:
- JP-A- 9 099 391
- JP-A- 59 010 493
- JP-A- 62 197 294
- US-A- 4 529 669
- US-A1- 2010 206 130
- KAZUTOSHI NISHIMOTO ET AL: "Paper no. PVP2009-77235 Amelioration of Microcracking in Multipass Weld Metal of Alloy 690 by Adding Rare Earth Metals", ASME 2009 PRESSURE VESSELS AND PIPING CONFERENCE (PVP2009),, vol. 6, 1 January 2009 (2009-01-01), pages 1063-1070, XP009167096,

## Description

### FIELD OF THE INVENTION

The present invention relates to welding materials (welding consumables) for cryogenic steels, which are used for welding of cryogenic steels to be used at extremely low temperatures (cryogenic temperatures) such as temperatures around liquid helium temperature [4 K (-269°C)] and temperatures around liquid hydrogen temperature [14 K (-259°C)]. Specifically, the present invention relates to welding materials for cryogenic steels, which less suffer from ductility-dip cracking occurring in a reheated zone. The welding materials according to embodiments of the present invention are suitably used for superconducting coils and other devices that are operated at cryogenic temperatures and require non-magnetic properties.

### BACKGROUND OF THE INVENTION

Superconducting coils and other devices operated at cryogenic temperatures and requiring non-magnetic properties are cooled at cryogenic temperatures (4 to 14 K) in the vicinity of the absolute zero point typically with liquid helium or liquid hydrogen during operation. Devices (mechanical structures) to be used in such cryogenic environments employ cryogenic steels which exhibit satisfactory mechanical properties such as strengths and toughness even at cryogenic temperatures. Devices, when to be exposed to magnetic environments as in superconducting power generation, require stability in non-magnetic properties, in addition to the above properties. Exemplary customary cryogenic steels satisfying these conditions mainly include austenitic stainless steels such as SUS 304L and SUS 316L steels specified in Japanese Industrial Standards (JIS) and further include INCONEL (registered trademark) alloys, high-manganese steels, and precipitation hardening non-magnetic steels to be used in some applications.

The mechanical structures to be used at cryogenic temperatures are often assembled by a welding process, such as welding joint, in consideration of economic efficiency. Welding materials for the welding process require such properties as to enable satisfactory welding of cryogenic steels and to give good cryogenic properties (mechanical properties such as strengths and toughness) in weld beads (weld metal). The assignee of the present invention has disclosed a technique of this category in Japanese Patent No. 3410261 (hereinafter also referred to as "patent literature"). The technique disclosed in the patent literature suitably controls the contents of C, Si, Mn, Ni, Cr, Mo, and N and further controls the contents of impurity elements such as P and S to 0.005% or less to prevent hot cracking.

Superconducting coils and other devices operated at cryogenic temperatures and requiring non-magnetic properties may have large sizes in some applications. Such large-sized structures often employ base metals having large wall-thicknesses so as to have satisfactory mechanical strengths and may employ very thick sheets or plates of about 250 mm in base metal thickness. For more efficient welding process, welding of thick plates often employs narrow-groove welding (at a groove angle of about 0° to about 10°). This is because the narrow-groove welding can be performed with a small amount of weld metal. The welding of thick plates further employs welding process of single pass per layer welding on the narrow groove. Accordingly, strong demands have been made to develop a welding material which exhibits the above properties, namely, which enables satisfactory welding of cryogenic steels and excels in cryogenic properties in weld beads, even when subjected to the narrow-groove welding (preferably welding on a narrow groove by a single pass per layer technique).

However, the narrow-groove welding applies significant restraint on the weld metal and disadvantageously often causes hot cracking. Hot cracking phenomena occurring on the weld metal are roughly classified as "solidification cracking" and "ductility-dip cracking occurring in a reheated zone." Among them, the former "solidification cracking." is trivial but the latter "ductility-dip cracking occurring in a reheated zone" significantly affects welding materials for cryogenic steels, which are used for welding of cryogenic steels to be used at cryogenic temperatures. Welding with welding materials for cryogenic steels to be used in special applications such as large-sized superconducting coils is performed at a relatively low speed, at most 7 to 15 cm/min, as compared to welding with regular welding materials. The low speed is set in consideration of other factors, such as wettability of the weld metal, than cracking. The welding materials for cryogenic steels are not subjected to high-speed welding, where solidification cracking may disadvantageously occur, and are considered not to suffer from solidification hot cracking unlike regular welding materials. In contrast, the welding materials for cryogenic steels to be used in the applications may often suffer from "ductility-dip cracking occurring in a reheated zone." This is probably because the weld metal is significantly restrained, and such a tensile stress as to conquer hot ductility of the welding material is applied to the weld metal in a reheated zone to cause ductility-dip cracking. Improvements in hot ductility of the weld metal, if possible, may effective for suppressing "ductility-dip cracking occurring in a reheated zone," and this may also improve the efficiency of welding process.

Topically, Nakano et al. discloses a technique based on this idea in "Effects of Cr and S on Ductility-dip Cracking Susceptibility in Reheated Weld Metals of Ni-Cr-Fe Ternary Alloys," quarterly journal of the Japan Welding Society 11(1), 108-113, 993 (hereinafter also referred to as "non-patent literature"). The non-patent literature reports the effects of Cr and S on ductility-dip cracking susceptibility in reheated weld metals of Ni-based alloy having a specific composition and mentions in effect that ductility-dip cracking susceptibility in reheated weld metals containing sulfur is higher than those containing phosphorus and silicon in Ni-Cr-Fe ternary alloys; that elongation at break may decrease with increasing amounts of sulfur of 0.001%, 0.007%, and 0.021%, indicating that sulfur affects ductility at high temperatures (hot ductility); and that sulfur is readily segregated at grain boundary and thereby promotes grain boundary fracture, and this may provably cause hot ductility dip. Specifically, this non-patent literature points out that the segregation of sulfur at grain boundary causes promotion of grain boundary fracture to cause hot ductility dip at high temperatures; and mentions that the ductility-dip cracking occurring in a reheated zone can be prevented by minimizing the amount of sulfur contained as an impurity.

As is described above, strong demands have been made to provide a technique which not only enables satisfactory welding of cryogenic steels and provides satisfactory cryogenic properties in weld beads even upon narrow-groove welding (preferably even upon narrow-groove welding by the single pass per layer technique) for higher efficiency of welding process, but also prevents ductility-dip cracking in a reheated zone and enables dramatic improvements in hot ductility of weld metal. The present inventors, however, have found that the technique of reducing sulfur content as taught in the non-patent literature fails to give sufficiently satisfactory properties under such severe welding conditions. Even if the idea of preventing ductility-dip cracking occurring in a reheated zone by minimization of impurity sulfur as taught in the non-patent literature is to be applied to the technique disclosed in the patent literature, the sulfur content disclosed in the patent literature is sufficiently low, production of a welding material having a further lower sulfur content is extremely difficult and requires the use of a high-purity raw material containing substantially no sulfur. This increases cost and is not economically efficient. The patent literature fails to consider about prevention of ductility-dip cracking and fails to clearly teach the groove angle and shape of the base metal, although a cryogenic steel of 200 mm thick was used as a base metal and subjected to TIG welding (tungsten inert gas welding) at a welding speed of 7 cm/min in working examples. However, specimens in the working examples were sampled from a weld metal and subjected to various tests, and, based on this, it is readily understood that narrow-groove welding was not performed in the technique disclosed in the patent literature, indicating that no ductility-dip cracking occurred for this reason. Narrow-groove welding on a base metal having a further larger thickness are desired for improvements in productivity and strengths of mechanical structures. Accordingly, strong demands have been made to provide a welding material which can sufficiently exhibit the properties even upon welding under such severe conditions. JP 62 197294 discloses a welding wire for austenitic stainless steel comprising a specific ratio of each of C, Si, Mn, Ni, Cr, Mo, rare earth element, P, S, N and O and the balance being Fe and inevitable impurities in order to improve cracking resistance.
Kazutoshi Nishimoto et al.; Proceedings of the ASME 2009 Pressure Vessels and Piping Division Conference, Paper No. PVP2009-77235; pages 1063 to 1070; 2009 discloses amelioration of microcracking in multipass weld metal of alloy 690 by adding rare earth elements.

### SUMMARY OF THE INVENTION

The present invention has been made under these circumstances and an object thereof is to provide a welding material for cryogenic steels, which is excellent in resistance to ductility-dip cracking in a reheated zone. Specifically, the object is to provide a novel welding material for cryogenic steels, which not only enables satisfactory welding of cryogenic steels and gives good cryogenic properties (mechanical properties such as strengths and toughness) in weld beads, but also does not suffer from ductility-dip cracking in a reheated zone, even upon narrow-groove welding (preferably even upon narrow-groove welding by the single pass per layer technique).

Accordingly, the present invention provides a welding material for cryogenic steels, which contains carbon (C) in a content of more than 0% and less than or equal to 0.08%; silicon (Si) in a content of more than 0% and less than or equal to 2.0%; manganese (Mn) in a content of 8.0% to 18.0%; nickel (Ni) in a content of 12.5% to 20.0%; chromium (Cr) in a content of 10.0% to 14.0%; molybdenum (Mo) in a content of 2.0% to 7.0%; nitrogen (N) in a content of more than 0% and less than or equal to 0.20%; and sulfur (S) in a content of more than 0% and less than or equal to 0.005%, in mass percent, in which the welding material further contains iron and inevitable impurities The welding material further contains at least one rare-earth element (REM) in a content of 0.001 % to 0.1 % in mass percent.

The present invention can provide a novel welding material for cryogenic steels, which has a suitably controlled chemical composition (particularly the content of at least one rare-earth element), thereby enables satisfactory welding of cryogenic steels, provides good cryogenic properties (mechanical properties such as strengths and toughness) in weld beads, and does not suffer from ductility-dip cracking in a reheated zone even upon narrow-groove welding (preferably even upon narrow-groove welding by the single pass per layer technique.

### BRIEF DESCRIPTION OF THE DRAWINGS

FIG. 1 illustrates dimensions of a base metal to be used in evaluation of cracking resistance in experimental examples;
FIG. 2 illustrates a position where a hot ductility testing specimen is sampled in the experimental examples; and
FIG. 3 schematically illustrates a specimen for true strain measurement to be used in the hot ductility testing.

### DETAILED DESCRIPTION OF THE PREFERRED EMBODIMENTS

The present inventors made intensive investigations to provide a welding material for cryogenic steels, which is excellent in resistance to ductility-dip cracking in a reheated zone. Specifically, they made intensive investigations based on a welding material having the chemical composition described in the patent literature so as to provide a welding material for cryogenic steels which ensures the above-mentioned properties at certain levels even upon narrow-groove welding, preferably even upon narrow-groove welding by the single pass per layer technique for further higher efficiency of welding process. As a result, they have found that, in addition to minimization of impurity sulfur as in the customary technique, the positive addition of at least one rare-earth element (hereinafter also briefly and generically referred to as REM) in a predetermined amount is effective for the suppression of the grain boundary segregation of sulfur, which adversely affects the resistance to ductility-dip cracking at high temperatures; and that this provides a welding material for cryogenic steels which is surely resistant to solidification cracking and, in addition, is satisfactorily resistant to ductility-dip cracking in a reheated zone even when subjected to welding under such severe conditions as mentioned above for high efficiency of welding process. The present invention has been made based on these findings.

As used herein the term "cryogenic temperature" (extremely low temperature) refers to a temperature in the range of from about 4 to about 14 K in terms of absolute temperature. Specifically, the "cryogenic temperature" refers to an operation temperature typically of a superconducting coil upon operation with cooling with such a coolant as liquid helium or liquid hydrogen.

As used herein the term "cryogenic steel" (portion corresponding to a base metal) refers to a steel to be used at the cryogenic temperature(s). The present invention specifies the chemical composition of a welding material to be used in welding of the cryogenic steel, but the cryogenic steel herein is not limited, as long as being one generally used. Such cryogenic steels for use herein include austenitic stainless steels (stainless steels having an austenitic structure) such as SUS 304L and SUS 316L steels; INCONEL (registered trademark) alloys, high-manganese steels, and precipitation hardening non-magnetic steels; of which austenitic stainless steels are preferred.

Also as used herein the term "welding material" refers to a material to be used for welding, such as a welding wire or a welding rod.

As used herein the phrase "excellent in resistance to ductility-dip cracking in a reheated zone" (also briefly referred to as "excellent in hot ductility" refers to such a property that a weld bead has a true strain of 0.30 or more when subjected to a high-temperature tensile test at 1000°C under conditions described in the experimental examples mentioned later, and a welded specimen does not suffer from cracking (has a number of crack of zero) when cracking resistance is measured under conditions described in the experimental examples.

A chemical composition of the welding material according to the present invention will be described below.

The welding material contains carbon (C) in a content of 0.08% or less; silicon (Si) in a content of 2.0% or less; manganese (Mn) in a content of 8.0% to 18.0%; nickel (Ni) in a content of 12.5% to 20.0%; chromium (Cr) in a content of 10.0% to 14.0%; molybdenum (Mo) in a content of 2.0% to 7.0%; nitrogen (N) in a content of 0.20% or less; and sulfur (S) in a content of 0.005% or less, in which the welding material further contains iron and inevitable impurities. The welding material further contains at least one rare-earth element (REM) in a content of 0.001% to 0.1% in mass percent. The contents of C, Si, Mn, Ni, Cr, Mo, N, and S elements are basically the same as with the welding material described in the patent literature. The positive addition of REM in the predetermined range significantly features the present invention. The positive addition of REM is intended to improve "resistance to ductility-dip cracking in a reheated zone, which is not intended in the patent literature. Specifically, REM is added in a predetermined content so as to improve the resistance under predetermined welding conditions for obtaining higher efficiency of welding process.

Initially, C, Si, Mn, Ni, Cr, Mo, N, and S elements as basic elements will be described.

### Carbon (C) content: more than 0% and less than or equal to 0.08%

Carbon (C) element forms γ (austenite) and, in addition, effectively strengthens the matrix. To exhibit these effects advantageously, the carbon content is preferably 0.005% or more. However, the carbon content is controlled to 0.08% or less, because carbon, if present in a content of more than 0.08%, may adversely affect toughness. The carbon content is preferably controlled to 0.05% or less.

### Silicon (Si) content: more than 0% and less than or equal to 2.0%

Silicon (Si) element is effective as a deoxidizer. To exhibit such effects advantageously, the Si content is preferably 0.1% or more, and more preferably 0.40% or more. However, the Si content is controlled to 2.0% or less, because Si, if present in a content of more than 2.0%, may adversely affect toughness due to the formation of delta (δ) ferrite and sigma (σ) phase. The Si content is preferably controlled to 1.0% or less.

### Manganese (Mn) content: 8.0% to 18.0%

Manganese (Mn) element is effective for the formation of austenite and is also effective for increasing the solubility of nitrogen serving as a principal strengthening element to prevent the generation of nitrogen-induced blow holes. Manganese element is also effective as a deoxidizer. To exhibit these effects advantageously, the Mn content is controlled to 8.0% or more and is preferably 9.5% or more. However, the Mn content is controlled to 18.0% or less, because manganese, if present in a content of more than 18.0%, may invite precipitation of a brittle phase to adversely affect the ductility and toughness. The Mn content is preferably controlled to 15.0% or less.

### Nickel (Ni) content: 12.5% to 20.0%

Nickel (Ni) element is important for the formation and stabilization of austenite. Nickel is contained herein in a relatively high content in contrast to customary welding materials for cryogenic steels. The relatively high content of nickel is intended to complement nitrogen so as to further stabilize austenite, which nitrogen element intensively works for the formation and stabilization of austenite, as mentioned later. Nickel element also suppresses the formation of delta ferrite or allows the delta ferrite, even if solidified, to be transformed into an austenitic structure rapidly during the solidification process or cooling process, thus contributing to more satisfactory toughness. The austenitic structure has a high solid solubility of nitrogen and suppresses the formation of delta ferrite having a low solid solubility of nitrogen, thus effectively preventing the generation of nitrogen-induced blow holes upon welding. Above all, nickel less adversely affects the corrosion resistance and toughness than other austenite-stabilizing elements such as the aforementioned C, Mn, and Ni, and the after-mentioned N do. The presence of nickel in a relatively large content as in the present invention can provide a low magnetic permeability due to the formation and stabilization of austenite, and can effectively prevent the generation of nitrogen-induced blow holes. To exhibit these effects advantageously, the Ni content is controlled to 12.5% or more and is preferably 13.5% or more. However, the Ni content is controlled to 20.0% or less, because nickel, if present in a content of more than 20.0%, may exhibit saturated effects and may goes to economical waste due to expensiveness of nickel. The Ni content is preferably 15.0% or less.

### Chromium (Cr) content: 10.0% to 14.0%

Chromium (Cr) element contributes to corrosion resistance and rust prevention and effectively improves the solubility of nitrogen serving as a principal strengthening element To exhibit these effects advantageously, the Cr content is controlled to 10.0% or more and is preferably 11.0% or more. However, the Cr content is controlled to 14.0% or less, because Chromium, if present in a content of more than 14.0%, may promote the formation of delta ferrite to adversely affect the toughness. The Cr content is preferably 13.0% or less.

### Molybdenum (Mo) content: 2.0% to 7.0%

Molybdenum (Mo) element serves as a strengthening element as with after-mentioned nitrogen and improves the solubility of nitrogen. In addition, this element improves hot ductility and improves resistance to ductility-dip cracking. To exhibit these effects advantageously, the Mo content is controlled to 2.0% or more and is preferably 4.0% or more. However, the Mo content is controlled to 7.0% or less, because molybdenum, if present in a content of more than 7.0%, may promote the formation of delta ferrite and the generation of a brittle phase to impair the toughness. The Mo content is preferably 6.0% or less.

### Nitrogen (N) content: more than 0% and less than or equal to 0.20%

Nitrogen (N) element significantly contributes to the formation and stabilization of austenite, as with carbon, and is also effective for the strengthening of the matrix. Nitrogen less adversely affects the toughness than carbon does. To exhibit these effects advantageously, the nitrogen content is preferably 0.03% or more, and more preferably 0.10% or more. However, the nitrogen content is controlled to 0.20% or less, because nitrogen, if present in a content of more than 0.20%, may cause blow holes upon welding to cause welding defects. The nitrogen content is preferably controlled to 0.15% or less.

### Sulfur (S) content more than 0% and less than or equal to 0.005%

Sulfur (S) element is segregated at grain boundary and thereby adversely affects the resistance to ductility-dip cracking in a reheated zone, as described in the non-patent literature. To avoid this, the sulfur content is controlled to 0.005% or less. The sulfur content is desirably minimized and is preferably controlled to 0.0045% or less, and more preferably controlled to 0.0040% or less.

The welding material according to the present invention contains the above-mentioned elements as preconditioned elements and further contains at least one rare-earth element (REM) in a content of 0.001% to 0.1%. The present inventors have found that a welding material further containing REM has more satisfactory resistance to ductility-dip cracking in a reheated zone than a welding material containing no REM and, preferably, can exhibit the properties even upon welding under severe conditions for the high efficiency of welding process (see experimental examples mentioned later), because the presence of REM suppresses the grain boundary segregation of sulfur. This is probably because as follows. Rare-earth elements have strong desulfurizing effects and can stabilize dissolved sulfur as sulfides of rare-earth elements during the solidification process at which a weld bead is formed For example, rare-earth elements probably form sulfides such as CeS and LaS and thereby suppress the grain boundary segregation of sulfur. The sulfides of rare-earth elements are stable at high temperatures even upon reheating due to welding in a subsequent pass and can stabilize sulfur therein even at 1000°C at which ductility-dip cracking may occur. This may improve hot ductility at 1000°C and improve resistance to ductility-dip cracking. Strong desulfurizing effects of rare-earth elements have been already reported, but the effects of such rare-earth elements to improve hot ductility at 1000°C has not yet been known.

### At least one rare-earth element (REM): 0.001% to 0.1%

Rare-earth elements significantly contribute to improvements in resistance to ductility-dip cracking in a reheated zone (improvements in hot ductility), as is described above. To exhibit these effects advantageously, the total content ofREMs is 0.001% or more. The addition of REM in a content of 0.001% or more provides a true strain of 0.30 or more and suppresses cracking to exhibit desired properties. The true strain is an index of hot ductility. The total content of REMs is preferably 0.01% or more. Rare-earth elements exhibit the effects increasingly substantially proportionally to an increasing total content ofREMs. However, the REM content is controlled to 0.1% or less, because REMs, if present in an excessively high content, may be segregated at grain boundary to adversely affect the toughness. The REM content is preferably 0.06% or less. Such preferred range of the REM content is desirably suitably set in consideration of balance between the hot ductility improving effect and the deterioration of toughness due to excess REMs.

In customary regular welding materials, rare-earth elements may be added in some cases so as to prevent solidification hot cracking, because rare-earth elements readily form oxides and sulfides, and control of these may contribute to the prevention of solidification hot cracking. However, as is described above, welding materials for cryogenic steels to be used in special applications such as large-sized superconducting coils as in the present invention are not subjected to high-speed welding, where solidification cracking may occur, and do not suffer from solidification hot cracking that occurs in regular welding materials. Accordingly, customary welding materials for use in these applications have not employed positive addition of rare-earth elements. The effectiveness of rare-earth elements as elements for the improvement of hot ductility at 1000°C, at which ductility-dip cracking may occur, has not yet been known at all, and the present inventors have first found that at least one rare-earth element, when added in a total content of 0.001% of more, can exhibit the effects advantageously.

The welding material according to the present invention contains the above-specified chemical compositions and further contains iron and inevitable impurities. Exemplary inevitable impurities include impurities that are inevitably contaminated upon manufacture, such as phosphorus (P) and boron (B). Typically, control of phosphorus to a content of about 0.005% or less and boron to a content of about 0.0005% or less is recommenced

Next, welding conditions preferably employed in the present invention will be described. Increasing demands have been made to improve the efficiency of welding process and to provide higher strengths of mechanical structures. To meet these demands, more severe welding conditions such as a narrower groove, a larger thickness of the base metal, and a smaller number of passes per layer as welding process conditions are recommended The welding material according to the present invention, even when employed in welding under such severe conditions, less suffers from ductility-dip cracking and is extremely useful (see after-mentioned experimental examples).

### Groove Angle

A smaller groove angle can reduce the amount of weld metal, thereby reduce the cost, and increase the efficiency of welding process. The groove angle is about 20° to about 50° in regular weld joints of about 20 mm thick, but is very narrow of about 0° to about 10° in narrow-groove welding of very thick sheets as in the present invention. Under such welding conditions to be employed herein, a large tensile stress is applied to weld beads, and ductility-dip cracking may be extremely liable to occur. However, the welding material according to the present invention less suffers from ductility-dip cracking even under such severe welding process conditions and is very useful.

### Other Welding Process Conditions

Welding in the present invention is recommended to be performed on the narrow groove by the single pass per layer technique. In other words, the welding conditions are very restrained. In addition, the present invention is preferably applied to base metals having a thickness of up to 260 mm at which welding can be performed without ductility-dip cracking so as to allow the product mechanical structures to have satisfactory strengths. The thickness of the base metal herein is larger by about 30% than that of the base metal (200 mm) in the experimental examples of the patent literature. The welding material according to the present invention less causes ductility-dip cracking even under such severe welding process conditions and is very useful.

Other welding conditions than those mentioned above are not limited, and the welding may be performed typically as TIG welding, MIG (metal inert gas) welding, electron beam welding, or laser beam welding.

### Examples

The present invention will be illustrated in further detail with reference to several experimental examples below. It should be noted, however, that these examples are never construed to limit the scope of the invention; that various changes and modifications are possible without departing from the spirit and scope of the invention; and such changes and modifications all fall within the scope of the invention.

### Method of Cracking Resistance Evaluation

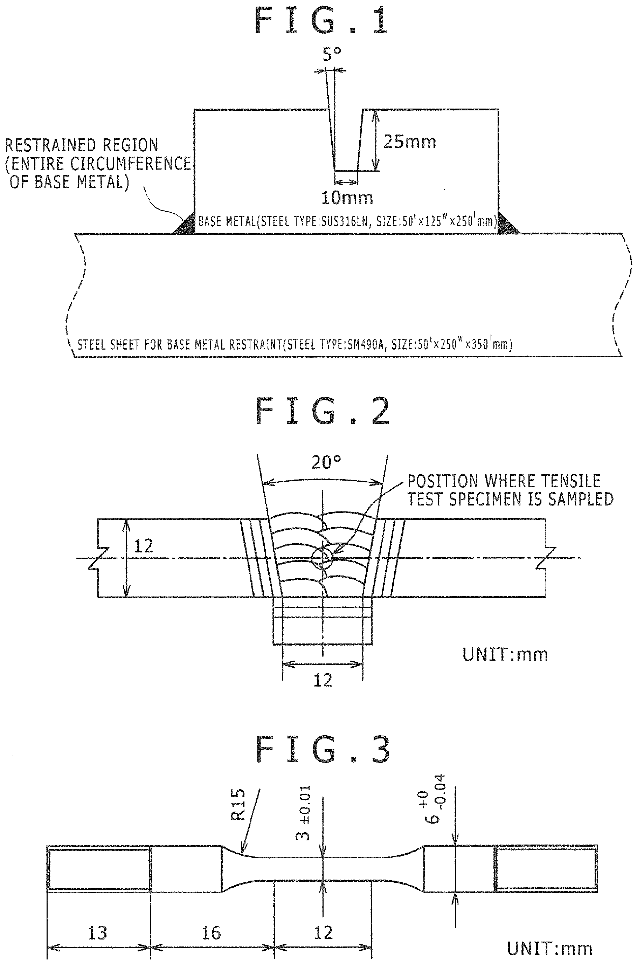

A SUS 316LN steel having a chemical composition given in Table 1 was prepared as a base metal, processed to have a groove as illustrated in FIG.1, placed on a restraint steel sheet (SM490A), and the entire circumference at which the base metal and the restrained steel sheet were in contact with each other was strained-welded in advance.

Welding wires having a diameter of 1.2 mm and having the chemical compositions as given in Table 2 (with the remainder including iron and inevitable impurities) were prepared as welding materials.

Using each of the welding wires, eight-layer build-up welding was performed by the single pass per layer technique to give welded specimens. Detailed welding process conditions are as follows:

| | |
|---|---|
| Welding process: | TIG welding |
| Welding current: | 240A |
| Arc voltage: | 12 V |
| Welding speed: | 8 cm per minute |
| Wire feed rate: | 18 g per minute |
| Manipulation of electrode: | Weaving |
| Interpass temperature: | 100°C to 150°C |
| Shielding gas: | Argon |
| Groove angle: | 10° |

The cracking resistance of the welded specimens was evaluated in the following manner.

Ten specimens for bending tests having dimensions of 125 mm by 50 mm by 10 mm were prepared so that the length in the weld line direction be 10 mm, subjected to side bend cracking tests at a bending radius of 50 mm, and whether cracks occurred or not was measured by a dye penetration inspection. In this experimental example, cracks of all the specimens were counted, and the cracking resistance of a sample was evaluated according to the following criteria. A sample evaluated as good was evaluated as passed (as having satisfactory cracking resistance).

| | |
|---|---|
| Good: | No crack |
| Fail: | Little cracking but several cracks occurred |
| Poor: | Several tens of cracks occurred |

### Method of High-temperature Ductility Evaluation

A SM490A steel was prepared as a base metal, and welding wires having the chemical compositions given in Table 2 were prepared as welding materials. Using each of the welding wires, five-layer build-up welding was performed by a two passes per layer technique as illustrated in FIG. 2 to give welded specimens. Detailed welding process conditions are as follows.

| | |
|---|---|
| Welding process: | TIG welding |
| Welding current: | 200 A |
| Arc voltage: | 12 V |
| Welding speed: | 8 cm per minute |
| Wire feed rate: | 10 g per minute |
| Manipulation of electrode: | Weaving |
| Interpass temperature: | 100°C to 150°C |
| Shielding gas: | Argon |
| Groove angle: | 20° |

Specimens for hot ductility testing illustrated in FIG. 3 were cut out from the central part of weld beads (see "position where tensile test specimen is sampled" in FIG. 2) of the above-prepared welded specimens. The diameters of a parallel region (the portion of 12 mm wide in FIG. 3) of each tensile test specimen before tensile test were measured at two points, and an average thereof was defined as Do.

Next, the tensile test specimens were subjected to high-temperature tensile tests at 1000°C under the following conditions:
Tensile speed: 3 mm per minute (strain rate of 0.05 per second)
Atmosphere: Argon

The diameters of the constricted part (part corresponding to the portion of 12 mm, wide in FIG. 3) at break were measured at two points, and an average thereof was defined as D. A true strain was calculated according to the expression: 2 x ln (D₀/D). A sample having a true strain of 0.30 or more was evaluated as having satisfactory hot ductility in this experimental example.

In this experimental example, a sample having a number of crack of zero as measured in terms of cracking resistance and having a true strain of 0.30 or more as determined in the above manner was evaluated as "excellent in resistance to ductility-dip cracking in a reheated zone."

The results of these evaluations are together indicated in Table 2. The symbol "-" in "REM" in Table 2 represents that the rare-earth element content is less than detection limit (namely, at an impurity level).

**TABLE 1**

| Chemical composition of base metal (percent by mass) | | | | | | | | | | |
|---|---|---|---|---|---|---|---|---|---|---|
| C | Si | Mn | Ni | Cr | Mo | N | P | S | Cu | O |
| 0.015 | 0.5 | 1.1 | 11.5 | 17.9 | 2.5 | 0.15 | 0.020 | 0.007 | - | - |

**TABLE 2**

| No. | Chemical composition of welding material (percent by mass) | | | | | | | | | | True strain at break | Cracking resistance |
|---|---|---|---|---|---|---|---|---|---|---|---|---|
| | C | Si | Mn | Ni | Cr | Mo | N | P | S | REM | at 1000°C | |
| 1 | 0.014 | 0.5 | 10.0 | 14.1 | 11.9 | 4.90 | 0.12 | 0.002 | 0,0037 | - | 0.23 | Poor |
| 2 | 0.009 | 0.5 | 10.0 | 14.0 | 11.9 | 4.92 | 0.13 | 0.009 | 0.0026 | - | 0.28 | Fair |
| 3 | 0.012 | 0.5 | 10.0 | 14.0 | 12.0 | 4.93 | 0.13 | 0.002 | 0.0020 | 0.010 | 0.41 | Good |
| 4 | 0.009 | 0.5 | 10.0 | 14.1 | 12.0 | 4.82 | 0.13 | 0.002 | 0.0009 | 0.054 | 0.54 | Good |
| 5 | 0.009 | 0.5 | 10.1 | 14.1 | 12.0 | 0.01 | 0.12 | 0.002 | 0.0036 | - | 0.10 | Poor |

| | | | | | | | | | | | | |
|---|---|---|---|---|---|---|---|---|---|---|---|---|
| The symbol "-" in "REM" represents that the rare-earth element content is less than detection limit. | | | | | | | | | | | | |

Samples Nos. 3 and 4 are examples containing at least one rare-earth element in a content within the range specified in the present invention, were excellent in cracking resistance and had satisfactory hot ductility in terms of true strain at break of 0.30 or more, demonstrating that these samples were excellent in resistance to ductility-dip cracking in a reheated zone.

In contrast, Samples Nos. 1 and 2 are comparative examples having a rare-earth element content out of the above-specified range (i.e., containing REM at an impurity level); of which Sample No. 1 is a comparative example having an excessively high carbon content These samples suffered from a large number of cracks and had insufficient hot ductility with a small true strain.

Likewise, Sample No. 5 is a comparative example having a rare-earth element content out of the range specified in the present invention and having an excessively low molybdenum content This sample suffered from a large number of cracks, and had insufficient hot ductility with a remarkably small true strain due to the low molybdenum content.

Though not indicated in Table 2, it was verified that the working examples of Samples Nos. 3 and 4 satisfying the conditions specified in the present invention both had good mechanical properties (e.g., 0.2-percent yield strength and fracture toughness) in weld beads at a cryogenic temperature (4 K) and exhibited good non-magnetic properties at room temperature.

## Claims

1. A welding material for cryogenic steels, comprising:
carbon (C) in a content of more than 0% and less than or equal to 0.08%;
silicon (Si) in a content of more than 0% and less than or equal to 2.0%;
manganese (Mn) in a content of 8.0% to 18.0%;
nickel (Ni) in a content of 12.5% to 20.0%;
Chromium (Cr) in a content of 10.0% to 14.0%;
molybdenum (Mo) in a content of 2.0% to 7.0%;
nitrogen (N) in a content of more than 0% and less than or equal to 0.20%; and
sulfur (S) in a content of more than 0% and less than or equal to 0.005%,
in mass percent,
wherein:
the welding material further comprises iron and inevitable impurities, and
the welding material further comprises at least one rare-earth element (REM) in a content of 0.001% to 0.1% in mass percent

## Patentansprüche

1. Schweißmaterial für kaltzähe Stähle, das Folgendes umfasst:
Kohlenstoff (C) in einem Gehalt von mehr als 0% und weniger als oder gleich 0,08%;
Silicium (Si) in einem Gehalt von mehr als 0% und weniger als oder gleich 2,0%;
Mangan (Mn) in einem Gehalt von 8,0% bis 18,0%;
Nickel (Ni) in einem Gehalt von 12,5% bis 20,0%;
Chrom (Cr) in einem Gehalt von 10,0% bis 14,0%;
Molybdän (Mo) in einem Gehalt von 2,0% bis 7,0%;
Stickstoff (N) in einem Gehalt von mehr als 0% und weniger als oder gleich 0,20%; und
Schwefel (S) in einem Gehalt von mehr als 0% und weniger als oder gleich 0,005% in Mengenprozent, wobei:
das Schweißmaterial ferner Eisen und unvermeidbare Verunreinigungen umfasst, und wobei das Schweißmaterial ferner mindestens ein Seltenerdelement (SEE) in einem Gehalt von 0,001% bis 0,1% in Massenprozent umfasst.

## Revendications

1. Matériau de soudure pour aciers cryogéniques, comprenant :
carbone (C) à une teneur supérieure à 0% et inférieure ou égale à 0,08% ;
silicium (Si) à une teneur supérieure à 0% et inférieure ou égale à 2,0% ;
manganèse (Mn) à une teneur de 8,0 % à 18,0% ;
nickel (Ni) à une teneur de 12,5 % à 20,0% ;
chrome (Cr) à une teneur de 10,0 % à 14,0% ;
molybdène (Mo) à une teneur de 2,0 % à 7,0 % ;
azote (N) à une teneur supérieure à 0 % et inférieure ou égale à 0,20 % ; et
soufre (S) à une teneur supérieure à 0 % et inférieure ou égale à 0,005 %, en pourcentage massique,
le matériau de soudure comprenant en outre du fer et des impuretés inévitables, et
le matériau de soudure comprenant en outre au moins un métal des terres rares à une teneur de 0,001 % à 0,1 % en pourcentage massique.
